# EUROPÄISCHE PATENTSCHRIFT

(11) **EP 0 766 072 B1**
(45) Veröffentlichungstag und Bekanntmachung des Hinweises auf die Patenterteilung: **22.12.1999**
(21) Anmeldenummer: 95115323.8
(22) Anmeldetag: 28.09.1995
(51) Int. Cl.: G01F 23/296, H05K 5/02

(54) **Elektronikgehäuse**
Electronic casing
Boîtier électronique

(43) Veröffentlichungstag der Anmeldung: 02.04.1997
(73) Patentinhaber: Endress + Hauser GmbH + Co., 79689 Maulburg (DE)
(72) Erfinder: Dreyer, Volker, D-79541 Lörrach (DE); Werner, Thomas, D-79689 Maulburg (DE)
(74) Vertreter: Leiser, Gottfried, Dipl.-Ing.

(56) Entgegenhaltungen:
- DE-A- 3 337 991
- DE-A- 4 311 963
- DE-C- 4 233 185

## Beschreibung

Die Erfindung betrifft ein Elektronikgehäuse, das ein von einem Metallmantel umgebenes offenes Ende aufweist, das durch einen in den Metallmantel eingepaßten Stopfen aus Isoliermaterial verschlossen wird, in dem Kontaktteile mit nach außen und innen aus dem Stopfen ragenden Anschlußteilen zur Verbindung der im Elektronikgehäuse untergebrachten Elektronik mit äußeren Anschlußleitern angebracht sind, wobei eines der Kontaktteile ein Erdungskontaktteil ist.

Aufgabe der Erfindung ist die Schaffung eines Elektronikgehäuses dieser Art, das eine einfache, schnelle und sichere Befestigung des Stopfens in dem offenen Ende des Elektronikgehäuses und zugleich die einwandfreie elektrische Verbindung des Metallmantels mit dem Erdungskontaktteil des Stopfens ermöglicht.

Nach der Erfindung wird diese Aufgabe dadurch gelöst, daß der Stopfen mit einer Umfangsnut versehen ist, daß das Erdungskontakteil einen mit den Anschlußteilen verbundenen Ring aufweist, an dem radial abstehende Federkrallen aus elastischem Metall angebracht sind, daß der Ring auf der Höhe der Umfangsnut derart in dem Stopfen angebracht ist, daß die Federkrallen in die Umfangsnut ragen, und daß die Länge der Federkrallen so bemessen ist, daß ihre Enden über einen Querschnitt, der dem Öffnungsquerschnitt des Metallmantels entspricht, so weit hinausragen, daß die Federkrallen beim Einsetzen des Stopfens in den Metallmantel abgebogen werden und federnd an der Innenseite des Metallmantels anliegen.

Zum Verschließen des erfindungsgemäßen Elektronikgehäuses wird einfach der Stopfen in das offene Ende des Elektronikgehäuses eingesetzt. Beim Einschieben des Stopfens stoßen die Enden der Federkrallen am Rand des Metallmantels an, so daß sie beim weiteren Einschieben des Stopfens zurückgehalten und dadurch abgebogen werden. Das Abbiegen wird dadurch ermöglicht, daß die Federkrallen in der Umfangsnut einen ausreichenden Verformungsspielraum zur Verfügung haben. Wenn schließlich die Federkrallen ausreichend abgebogen sind, können ihre Enden entlang der Innenseite des Metallmantels gleiten, an der sie federnd anliegen. Durch dieses federnde Anliegen wird das Einschieben des Stopfens nicht merklich erschwert. Dagegen setzen die abgebogenen Federkrallen einer Bewegung des Stopfens in der entgegengesetzten Richtung einen großen Widerstand entgegen, da sich ihre Enden dann in dem Metallmantel festkrallen. Somit wird der Stopfen praktisch unlösbar im Elektronikgehäuse befestigt, ohne daß hierfür Werkzeuge oder zusätzliche Befestigungsmittel erforderlich sind. Da die abgebogenen Federkrallen mit beträchtlicher Andruckkraft an der Innenfläche des Metallmantels anliegen, wird zugleich ein guter elektrischer Kontakt zwischen dem Erdungskontaktteil und dem Metallmantel erzielt. Sowohl die Haltewirkung als auch die Kontaktierung sind um so besser, je größer die Anzahl der Federkrallen ist.

Da der Stopfen durch die Federkrallen in der Öffnung des Elektronikgehäuses gehalten und zentriert wird, braucht der Stopfen selbst diese Funktionen nicht mehr auszuüben. Eine vorteilhafte Ausgestaltung des Elektronikgehäuses nach der Erfindung besteht daher darin, daß die zu beiden Seiten der Umfangsnut liegenden Randbereiche des Stopfens, die bei ganz eingeführtem Stopfen innerhalb des Metallmantels liegen, einen Querschnitt haben, der geringfügig kleiner als der Öffnungsquerschnitt des Metallmantels ist, so daß zwischen diesen Randbereichen und dem Metallmantel ein enger Spalt besteht. Durch den auf diese Weise geschaffenen Spalt kann die beim Einsetzen des Stopfens verdrängte Luft aus dem Elektronikgehäuse entweichen, so daß im Elektronikgehäuse kein Überdruck entsteht.

Wenn das Elektronikgehäuse unmittelbar vor dem Einsetzen des Stopfens mit einer flüssigen Vergußmasse gefüllt wird, die nach dem Einsetzen des Stopfens aushärtet, wird vorzugsweise der Spalt zwischen den Randabschnitten des Stopfens und dem Metallmantel so bemessen, daß Vergußmasse durch Kapillarwirkung in die Umfangsnut gezogen wird. Dadurch werden zwei Wirkungen erzielt: einerseits wird verhindert, daß Vergußmasse nach außen austritt, und andererseits ergibt die in der Umfangsnut angesammelte Vergußmasse, wenn sie ausgehärtet ist, eine gute zusätzliche Abdichtung zwischen dem Stopfen und dem Metallmantel.

Weitere Merkmale und Vorteile der Erfindung ergeben sich aus der folgenden Beschreibung eines Ausführungsbeispiels, das in den Zeichnungen dargestellt ist. In den Zeichnungen zeigen:
- Fig. 1: eine zum Teil geschnittene Ansicht eines elektromechanischen Füllstandssensors mit einem Elektronikgehäuse nach der Erfindung vor dem Einsetzen des getrennt dargestellten Stopfens,
- Fig. 2: eine Schnittansicht des Geräts von Fig. 1 nach dem Einsetzen des Stopfens,
- Fig. 3: eine teilweise geschnittene Ansicht des Stopfens und
- Fig. 4: eine perspektivische Ansicht des Erdungskontaktteils.

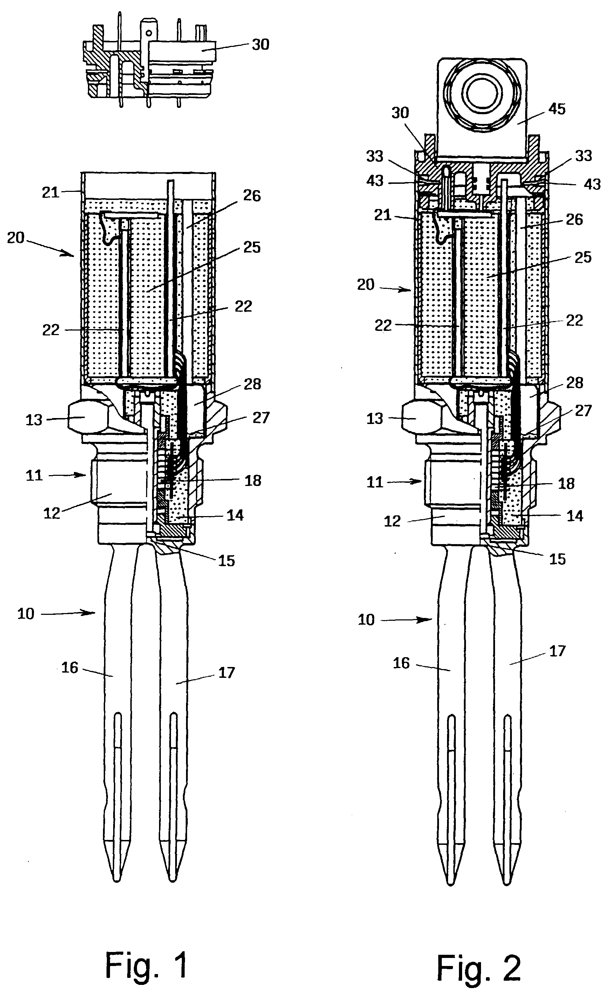

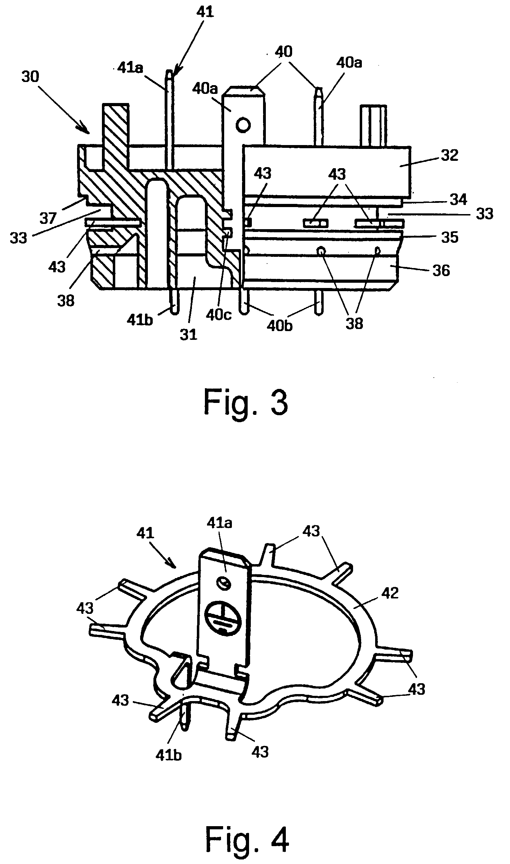

Die Figuren 1 und 2 der Zeichnung zeigen als Beispiel für ein elektrotechnisches Gerät, bei dem die Erfindung anwendbar ist, einen elektromechanischen Füllstandssensor 10 für die Überwachung eines vorbestimmten Füllstands in einem Behälter; ziehe z.B. DE-C-42 33 185 und DE-A-4311963. Der Füllstandssensor 10 hat ein Einschraubstück 11 mit einem Gewindeabschnitt 12 und einem Sechskantkopf 13. Der Innenraum 14 des Einschraubstücks 11 ist hohl und am unteren Ende durch eine Membran 15 verschlossen, an der die Enden von zwei Schwingstäben 16 und 17 befestigt sind. Mittels des Einschraubstücks 11 wird der Füllstandssensor 10 so in einer mit einem Innengewinde versehenen Öffnung der Behälterwand befestigt, daß die Schwingstäbe 16, 17 in das Innere des Behälters ragen und mit dem Füllgut in Berührung kommen, wenn dieses den zu überwachenden Füllstand erreicht.

In dem hohlen Innenraum 14 des Einschraubstücks 11 ist eine elektromechanische Wandleranordnung 18 angeordnet, die durch einen Stapel von piezoelektrischen Elementen gebildet ist. Die Wandleranordnung 18 enthält Erregungswandler und Empfangswandler. Wenn an die Erregungswandler eine elektrische Wechselspannung angelegt wird, versetzen sie die Membran 15 in Schwingungen, die auf die Schwingstäbe 16 und 17 übertragen werden, so daß diese entgegengesetzte Schwingungen quer zu ihrer Längsrichtung ausführen. Wenn auf die Empfangswandler mechanische Schwingungen einwirken, erzeugen sie eine elektrische Wechselspannung mit der Frequenz der mechanischen Schwingungen. Eine zugehörige Elektronik enthält einen Verstärker, der am Eingang die von den Empfangswandlern erzeugte Wechselspannung empfängt und am Ausgang die verstärkte Wechselspannung zu den Erregungswandlern überträgt. Somit liegt das von der Membran 15 und den Schwingstäben 16, 17 gebildete mechanische Schwingsystem über die Wandleranordnung 18 im Rückkopplungskreis des Verstärkers, so daß es sich zu Schwingungen mit einer Eigenresonanzfrequenz erregt.

Die Funktion des Füllstandssensors 10 beruht auf folgender Erscheinung: Wenn die Schwingstäbe 16, 17 nicht mit dem Füllgut in Berührung stehen, ist die Eigenresonanzfrequenz des mechanischen Schwingsystems höher als wenn die Schwingstäbe 16, 17 in das Füllgut eintauchen. Die zugehörige Elektronik enthält daher zusätzlich eine Auswerteschaltung, die feststellt, ob die Frequenz der vom Verstärker abgegebenen Wechselspannung, die mit der Frequenz der mechanischen Schwingung übereinstimmt, über oder unter einem vorgegebenen Schwellenwert liegt. Wenn diese Frequenz über dem Schwellenwert liegt, bedeutet dies, daß die Schwingstäbe 16, 17 in Luft schwingen, also das Füllgut den zu überwachenden Füllstand nicht erreicht hat. Wenn dagegen die Frequenz unter dem Schwellenwert liegt, bedeutet dies, daß das Füllgut im Behälter den zu überwachenden Füllstand erreicht oder überschritten hat.

Zur Unterbringung der Elektronik ist an der außerhalb des Behälters liegenden Stirnseite des Einschraubstücks 11 ein Elektronikgehäuse 20 angebracht. Die Wand des Elektronikgehäuses 20 ist durch ein Metallrohr 21 gebildet, das am einen Ende an dem Einschraubstück 11 dicht befestigt ist und am entgegengesetzten Ende offen ist. Die Elektronik ist in üblicher Weise durch elektronische Bauteile gebildet, die auf Leiterplatten 22 montiert sind; zur Vereinfachung sind in der Zeichnung nur die Leiterplatten dargestellt.

Nachdem die Elektronik in das Elektronikgehäuse 20 eingesetzt worden ist, werden die Hohlräume im Elektronikgehäuse 20 und im Einschraubstück 11 mit einer Vergußmasse 25 ausgefüllt, die durch das offene Ende des Elektronikgehäuses 20 in flüssigem Zustand eingefüllt wird und dann aushärtet. Die Vergußmasse ist beispielsweise ein weicher, gelartiger Zweikomponenten-Silikonkautschuk, der nach dem Mischen der beiden Komponenten flüssig ist und dann durch Additionsvernetzung vulkanisiert. Zum Einfüllen der Vergußmasse muß das Gerät in die in Fig. 1 dargestellte vertikale Einfüllposition gebracht werden, in der das offene Ende des Elektronikgehäuses 20 oben liegt. Im Betrieb kann das Gerät dagegen in jeder beliebigen Lage montiert werden; gewöhnlich werden Füllstandssensoren der beschriebenen Art in der Seitenwand des Behälters auf der Höhe des zu überwachenden Füllstands horizontal angebracht. Die im folgenden verwendeten Begriffe "oben" und "unten" beziehen sich auf die in der Zeichnung dargestellte Einfüllposition.

Damit im Elektronikgehäuse 20 unabhängig von Fertigungs- und Dosierungsschwankungen und unabhängig von unterschiedlichen Bauteilegrößen stets eine gewünschte Füllhöhe genau eingehalten wird, ist in dem Elektronikgehäuse 20 ein Überlaufrohr 26 so angebracht, daß sein oberes Ende auf der gewünschten Füllhöhe unterhalb des oberen Randes des Elektronikgehäuses liegt. Am unteren Ende steht das Überlaufrohr 26 mit einer ringförmigen Luftkammer 28 in Verbindung, die im Übergangsbereich zwischen dem Elektronikgehäuse 20 und dem Einschraubstück 11 gebildet ist und in keiner Verbindung mit dem Volumen steht, das die Vergußmasse 25 aufnimmt. Überschüssige Vergußmasse, die beim Einfüllen die gewünschte Füllhöhe übersteigen würde, fließt durch das Überlaufrohr 26 in die Luftkammer 28 ab und sammelt sich als Überlaufmenge 27 am Boden der Luftkammer an. Somit wird die Füllhöhe der Vergußmasse 25 im Elektronikgehäuse 20 stets genau auf der Höhe des oberen Randes des Überlaufrohres 26 gehalten. Da die Überlaufmenge in jedem Fall klein gegen das Volumen der Luftkammer 28 ist, bleibt die Luftkammer nach Beendigung des Einfüllvorgangs zum größten Teil mit Luft gefüllt. Das in der Luftkammer 28 eingeschlossene Luftvolumen wirkt im Betrieb des Geräts als Temperaturbarriere zwischen dem mit dem Behälter verbundenen Einschraubstück 11 und dem Elektronikgehäuse 20, wodurch der Wärmetransport vom Füllstandssensor zur Elektronik reduziert wird. Außerdem nimmt das in der Luftkammer 28 und im Überlaufrohr 26 vorhandene Luftvolumen den Überdruck auf, der im Elektronikgehäuse 20 entsteht, wenn sich die Vergußmasse bei Erwärmung ausdehnt.

Sofort nach dem Einfüllen der Vergußmasse 25, während sich diese noch in flüssigem Zustand befindet, wird das offene Ende des Elektronikgehäuses 20 durch einen Stopfen 30 verschlossen, der in Fig. 1 oberhalb des noch offenen Elektronikgehäuses 20 dargestellt ist und an Hand der Figuren 3 und 4 näher erläutert wird.

Der Stopfen 30 ist ein Kunststofformteil, das beispielsweise durch Spritzguß hergestellt ist. In die Unterseite des Stopfens 30 ist eine Ausnehmung 31 eingeformt. Ein oberer Abschnitt 32 des Stopfens hat einen Durchmesser, der größer als der Innendurchmesser des Metallrohres 21 ist. In dem sich nach unten anschließenden Abschnitt ist eine rings um den Umfang verlaufende Umfangsnut 33 gebildet, und die die Umfangsnut 33 auf beiden Seiten begrenzenden Randabschnitte 34 und 35 haben einen Durchmesser, der geringfügig kleiner als der Innendurchmesser des Metallrohres 21 ist. Der unterhalb der Umfangsnut 33 liegende Randbereich 35 geht in einen Umfangsrand 36 über, der die Ausnehmung 31 umgibt und einen noch kleineren Außendurchmesser als die Randabschnitte 34 und 35 hat. Somit besteht zwischen dem Abschnitt 32 und dem Randabschnitt 34 eine Schulter 37, die das Eindringen des Stopfens 30 in das offene Ende des Elektronikgehäuses 20 begrenzt, und der gesamte unterhalb der Schulter 37 liegende Teil des Stopfens 30 paßt mit leichtem Spiel in das Elektronikgehäuse 20. Durch den Umfangsrand 36 verlaufen Entlüftungslöcher 38 von der Ausnehmung 31 zum Außenumfang.

Der Stopfen 30 dient außer zum Verschließen des Elektronikgehäuses 20 auch zur Verbindung der im Elektronikgehäuse 20 untergebrachten Elektronik mit äußeren Leitungen. Zu diesem Zweck sind in dem Stopfen 30 mehrere metallische Kontaktteile 40 und ein metallisches Erdungskontaktteil 41 angebracht, die beim Herstellen des Stopfens in den Kunststoff eingebettet werden. Die Kontaktteile 40, von denen in Fig. 3 zwei sichtbar sind, die im rechten Winkel zueinander angeordnet sind, sind alle gleich; jedes Kontaktteil 40 ist ein flaches Metallblechteil mit einer nach oben aus dem Stopfen 30 herausragenden flachen Kontaktzunge 40a und einer nach unten aus dem Stopfen 30 herausragenden Kontaktspitze 40b. In dem im Stopfen 30 eingebetteten Mittelteil sind Kerben 40c angebracht, die eine bessere Verankerung des Kontaktteils im Kunststoff ergeben.

Das Erdungskontaktteil 41 ist in Fig. 4 gezeigt. Es hat ebenfalls eine nach oben aus dem Stopfen 30 herausragende flache Kontaktzunge 41a und eine nach unten aus dem Stopfen 30 herausragende Kontaktspitze 41b; diese Teile sind aber an einem Ring 42 so angebracht, daß sie senkrecht zur Ebene des Rings 42 nach der einen bzw. der anderen Seite von dem Ring abstehen. Ferner sind an dem Außenumfang des Rings 42 mehrere radial nach außen abstehende elastische Federkrallen 43 in Form von flachen Fingern angebracht. Zur Herstellung des Erdungskontaktteils 41 werden vorzugsweise alle Bestandteile in einem Stück aus einem elastischen Metallblech ausgestanzt, und anschließend werden die Kontaktzunge 41a nach der einen Seite und die Kontaktspitze 41b nach der anderen Seite aus der Ebene des Stanzteils rechtwinklig herausgebogen. Als Material für das Erdungskontaktteil 41 kann Federstahl, Edelstahl oder ein anderes hochelastisches Metall verwendet werden.

Der Ring 42 ist auf der Höhe der Umfangsnut 33 so in den Kunststoff des Stopfens 30 eingebettet, daß die Federkrallen 43 nach außen in die Umfangsnut 33 ragen und näher bei dem unteren Randabschnitt 35 als bei dem oberen Randabschnitt 34 liegen. Der Ring 42 ist so geformt, daß er von den Kontaktteilen 40 vollständig isoliert ist. Die radiale Länge der Federkrallen 43 ist so bemessen, daß die Enden der Federkrallen 43 auf einem Kreis liegen, dessen Durchmesser etwas größer als der Innendurchmesser des Metallrohres 21 ist; daher ragen die Federkrallen 43 rings um den Stopfen 30 etwas über den Umfang der Randabschnitte 34 und 35 hinaus, wenn der Stopfen noch nicht in das offene Ende des Elektronikgehäuses 20 eingesetzt ist.

Beim Einsetzen des Stopfens 30 in das offene Ende des Elektronikgehäuses 20 stoßen die Enden der Federkrallen 43 an den oberen Rand des Metallrohres 21 an, nachdem der Randabschnitt 35 in das Metallrohr 21 eingeführt worden ist. Beim weiteren Einschieben des Stopfens 30 werden die elastischen Federkrallen 43 nach oben abgebogen, bis schließlich ihre Enden entlang der Innenfläche des Metallrohres 21 nach unten gleiten können. Dieses Abbiegen wird durch die Umfangsnut 33 ermöglicht, die einen ausreichenden Verformungsspielraum nach oben zur Verfügung stellt. Hierfür ist es auch günstig, das die Federkrallen 43 nahe bei dem unteren Randabschnitt 35 liegen. Die abgebogenen Federkrallen 43 erlauben zwar ein leichtes Einschieben des Stopfens 30 in das Metallrohr 21, sie setzen aber einem Herausziehen des Stopfens 30 aus dem Metallrohr 21 einen großen Widerstand entgegen, da sich dann die Enden der Federkrallen 43 in dem Metallrohr 21 festkrallen. Auf diese Weise wird der Stopfen 30 durch die Federkrallen 43 im Elektronikgehäuse 20 sicher festgehalten. Ferner liegen die Enden der Federkrallen 43 infolge der elastischen Abbiegung mit beträchtlicher Andruckkraft an der Innenfläche des Metallrohres an, wodurch ein guter elektrischer Kontakt zwischen dem Erdungskontaktteil 41 und dem Metallrohr 21 erzielt wird. Sowohl die Haltewirkung als auch die Kontaktierung sind um so besser, je größer die Anzahl der Federkrallen 43 ist.

Damit die Federkrallen 43 zur Ausübung dieser Wirkungen richtig abgebogen werden können, müssen sie über eine ausreichende Länge in der Umfangsnut 33 freiliegen, und der Betrag, um den sie über den Innendurchmesser des Metallrohres 21 hinausragen, darf weder zu klein noch zu groß sein. Bei einem Durchmesser des Stopfens 30 von etwa 40 mm kann die radiale Länge der Federkrallen 43 etwa 5 mm betragen, und die Federkrallen 43 sollten um etwa 0,5 mm bis 1 mm über den Innendurchmesser des Metallrohres 21 hinausragen.

Beim Einführen des Stopfens 30 in das Elektronikgehäuse 20 wird zunächst Luft verdrängt, die sich oberhalb der Vergußmasse 25 befindet. Diese Luft kann durch den engen Spalt, der infolge des Spiels zwischen den Randbereichen 34, 35 und der Innenfläche des Metallrohres 21 besteht, problemlos nach außen entweichen. Dieses Spiel ist möglich, weil der Stopfen 30 durch die Federkrallen 43 gehalten wird und daher die Randbereiche 34 und 35 keine Haltewirkung ausüben müssen. Wenn beim weiteren Einschieben des Stopfens 30 der Umfangsrand 36 in die flüssige Vergußmasse 25 eindringt, wird etwas Vergußmasse verdrängt, die in das Überlaufrohr 26 abfließt, so daß die Füllhöhe im Elektronikgehäuse 20 unverändert bleibt. Zugleich wird Luft in der Ausnehmung 31 eingeschlossen, doch kann diese Luft durch die Entlüftungsöffnungen 38 nach außen entweichen, so daß in der Ausnehmung 31 kein Überdruck entsteht.

Wenn schließlich die Schulter 37 auf dem oberen Rand des Metallrohres 21 aufliegt, ist der Stopfen 30 vollständig eingesetzt (Fig. 2). Da in dieser Stellung das Überlaufrohr 26 in die Ausnehmung 31 des Stopfens 30 ragt, liegt die Füllhöhe der Vergußmasse 25 in der Ausnehmung 31, und daher ist auch der untere Teil der Ausnehmung 31 und der ringförmige Zwischenraum zwischen dem Umfangsrand 36 und dem Metallrohr 21 mit Vergußmasse gefüllt. Infolge des Spaltes, der zwischen dem Randabschnitt 35 und dem Metallrohr 21 besteht, wird Vergußmasse durch Kapillarwirkung nach oben in die Umfangsnut 33 gezogen. Diese Vergußmasse sammelt sich in der Umfangsnut 33 an, wodurch sich zwei Wirkungen ergeben: einerseits wird verhindert, daß die aufsteigende Vergußmasse nach außen austritt, und andererseits ergibt die in der Umfangsnut 33 angesammelte Vergußmasse, wenn sie ausgehärtet ist, eine gute zusätzliche Abdichtung zwischen dem Stopfen 30 und dem Metallrohr 21.

Wenn der Stopfen 30 in der in Fig. 2 dargestellten Weise vollständig in das Elektronikgehäuse 20 eingesetzt ist, stehen die von der Unterseite des Stopfens 30 nach unten ragenden Kontaktspitzen 40b, 41b der Kontaktteile 40, 41 mit Gegenkontaktstücken der Elektronik im Eingriff. Auf die nach oben ragenden flachen Kontaktzungen 40a, 41a ist ein mit einem Kabel verbundenes Steckverbindungsteil 45 aufgesteckt. Dadurch ist die Verbindung zwischen dem Kabel und der Elektronik in dem Elektronikgehäuse 20 hergestellt.

In der vorstehenden Beschreibung wurde angenommen, daß das offene Ende des Elektronikgehäuses 20 und demzufolge auch der Stopfen 30 rund sind. Das Erdungskontaktteil 41 mit von einem Ring 42 abstehenden elastischen Federkrallen 43 kann jedoch unter Erzielung der gleichen vorteilhaften Wirkungen auch bei Öffnungen und Stopfen von anderer Querschnittsform angewendet werden, beispielsweise bei einem elliptischen, quadratischen oder polygonalen Querschnitt. Es ist in jedem Fall nur erforderlich, daß die Enden der elastischen Federkrallen 43 im entspannten Zustand über einen Querschnitt, der dem Querschnitt der Öffnung entspricht, so weit hinausragen, daß die Federkrallen beim Einsetzen des Stopfens in die Öffnung abgebogen werden und federnd an der Innenwand der Öffnung anliegen.

Es ist auch nicht erforderlich, daß das Elektronikgehäuse über seine ganze Länge einen gleichbleibenden Querschnitt hat, wie es bei dem zuvor beschriebenen Metallrohr der Fall ist. Es genügt, daß der Bereich des offenen Endes, in den der Stopfen eingesetzt wird, von einem Metallmantel umgeben ist, in den der Stopfen eingepaßt ist. Der übrige Teil des Elektronikgehäuses kann dann eine beliebige Form haben.

## Patentansprüche

1. Elektronikgehäuse, das ein von einem Metallmantel (21) umgebenes offenes Ende aufweist, das durch einen in den Metallmantel (21) eingepaßten Stopfen (30) aus Isoliermaterial verschlossen wird, in dem Kontaktteile (40, 41) mit nach außen und innen aus dem Stopfen (30) ragenden Anschlußteilen (40a, 40b; 41a, 41b) zur Verbindung der im Elektronikgehäuse (20) untergebrachten Elektronik mit äußeren Anschlußleitern angebracht sind, wobei eines der Kontaktteile ein Erdungskontaktteil (41) ist, dadurch gekennzeichnet, daß der Stopfen (30) mit einer Umfangsnut (33) versehen ist, daß das Erdungskontakteil (41) einen mit den Anschlußteilen (41a, 41b) verbundenen Ring (42) aufweist, an dem radial abstehende Federkrallen (43) aus elastischem Metall angebracht sind, daß der Ring (42) auf der Höhe der Umfangsnut (33) derart in dem Stopfen (30) angebracht ist, daß die Federkrallen (43) in die Umfangsnut (33) ragen, und daß die Länge der Federkrallen (43) so bemessen ist, daß ihre Enden über einen Querschnitt, der dem Öffnungsquerschnitt des Metallmantels (21) entspricht, so weit hinausragen, daß die Federkrallen (43) beim Einsetzen des Stopfens (30) in den Metallmantel (21) abgebogen werden und federnd an der Innenseite des Metallmantels (21) anliegen.

2. Elektronikgehäuse nach Anspruch 1, dadurch gekennzeichnet, daß die Anschlußteile (41a, 41b) und die Federkrallen (43) in einem Stück mit dem Ring (42) aus elastischem Metallblech ausgestanzt sind und daß die Anschlußteile (41a, 41b) im rechten Winkel zur Ebene des Rings (42) nach entgegengesetzten Seiten abgebogen sind.

3. Elektronikgehäuse nach Anspruch 1 oder 2, dadurch gekennzeichnet, daß der Stopfen (30) ein Formkörper aus Kunststoff ist, in den die Kontaktteile (40, 41) eingebettet sind.

4. Elektronikgehäuse nach Anspruch 3, dadurch gekennzeichnet, daß der Stopfen (30) einen Bereich hat, dessen Querschnitt größer als der Öffnungsquerschnitt des Metallmantels (21) ist, so daß er das Eindringen des Stopfens (30) in den Metallmantel (21) begrenzt.

5. Elektronikgehäuse nach einem der Ansprüche 1 bis 4, dadurch gekennzeichnet, daß die zu beiden Seiten der Umfangsnut (33) liegenden Randabschnitte (34, 35) des Stopfens (30), die bei ganz eingeführtem Stopfen (30) innerhalb des Metallmantels (21) liegen, einen Querschnitt haben, der geringfügig kleiner als der Öffnungsquerschnitt des Metallmantels (21) ist, so daß zwischen diesen Randabschnitten (34, 35) und dem Metallmantel (21) ein enger Spalt besteht.

6. Elektronikgehäuse nach Anspruch 5, das unmittelbar vor dem Einsetzen des Stopfens (30) mit einer flüssigen Vergußmasse (25) gefüllt wird, die nach dem Einsetzen des Stopfens (30) aushärtet, dadurch gekennzeichnet, daß der Spalt zwischen den Randabschnitten (34, 35) des Stopfens (30) und dem Metallmantel (21) so bemessen ist, daß Vergußmasse (25) durch Kapillarwirkung in die Umfangsnut (33) gezogen wird.

7. Elektronikgehäuse nach Anspruch 6, dadurch gekennzeichnet, daß in die im Innern des Elektronikgehäuses (20) liegende Stirnseite des Stopfens (30) eine Ausnehmung (31) eingeformt ist, und daß der Stopfen (30) so weit in die Vergußmasse (25) eintaucht, daß die Ausnehmung (31) wenigstens teilweise mit Vergußmasse (25) gefüllt ist.

8. Elektronikgehäuse nach Anspruch 8, dadurch gekennzeichnet, daß Entlüftungslöcher (38) von der Ausnehmung zum Außenumfang des Stopfens (30) verlaufen.

## Claims

1. An electronics enclosure comprising, surrounded by a metal shroud (21), an open end closed off by a plug (30) of insulating material fitted in said metal shroud (21), in which contact parts (40, 41) having connecting parts (40a, 40b; 41a, 41b) extending from said plug (30) outwardly and inwardly are provided for connecting the electronics assembly accommodated in said electronics enclosure (20) to outer connecting leads, one of said contact parts being a grounding contact part (41), characterized in that said plug (30) includes a peripheral groove (33), that said grounding contact part (41) includes a ring (42) connected to said connecting parts (41a, 41b) and on which radially protruding spring claws (43) of elastic material are provided, that said ring (42) is applied level with said peripheral groove (33) in said plug (30) such that said spring claws (43) protrude into said peripheral groove (33), and that the length of said spring claws (43) is dimensioned such that their ends protrude past a cross-section, corresponding to the cross-section of the opening of said metal shroud (21), to such an extent that said spring claws (43) are flexed on insertion of said plug (30) into said metal shroud (21) and come into spring contact with the inside surface of said metal shroud (21).

2. The electronics enclosure as set forth in claim 1, characterized in that said connecting parts (41a, 41b) and said spring claws (43) are punched in one piece with said ring (42) from an elastic sheet-metal plate, and that said connecting parts (41a, 41b) are bent out at right angles to the plane of said ring (42) to opposite sides.

3. The electronics enclosure as set forth in claim 1 or 2, characterized in that said plug (30) is a molding of plastics material in which said contact parts (40, 41) are embedded.

4. The electronics enclosure as set forth in claim 3, characterized in that said plug (30) has a portion the cross-section of which is greater than said opening cross-section of said metal shroud (21) so that it limits penetration of said plug (30) into said metal shroud (21).

5. The electronics enclosure as set forth in any of the claims 1 to 4, characterized in that the rim portions (34, 35) of said plug (30) located on either side of said peripheral groove (33), which are located within said metal shroud (21) when said plug (30) is fully inserted, have a cross-section which is slightly smaller than said opening cross-section of said metal shroud (21), so that a narrow gap exists between these rim portions (34, 35) and said metal shroud (21).

6. The electronics enclosure as set forth in claim 5 which is filled immediately prior to insertion of said plug (30) with a fluid potting compound (25) which hardens following insertion of said plug (30), characterized in that the gap between said rim portions (34, 35) of said plug (30) and said metal shroud (21) is dimensioned such that potting compound (25) is drawn into said peripheral groove (33) by the capillary effect.

7. The electronics enclosure as set forth in claim 6, characterized in that a recess (31) is formed in the end face of said plug (30) located in the interior of said electronics enclosure (20), and that said plug (30) dips into said potting compound (25) so far that said recess (31) is filled with potting compound (25) at least partly.

8. The electronics enclosure as set forth in claim 8, characterized in that vent holes (38) extend from said recess to the outer periphery of said plug (30).

## Revendications

1. Boîtier électronique qui présente une extrémité ouverte entourée d'une enveloppe métallique (21) et qui est fermée par un bouchon (30) en matière isolante encastré dans l'enveloppe métallique (21), dans lequel des éléments de contact (40, 41) possédant des parties de connexion (40a, 40b ; 41a, 41b) saillant vers l'extérieur et l'intérieur du bouchon (30) destinés à connecter l'électronique logée dans le boîtier d'électronique (20) à des conducteurs de connexion extérieurs, l'une des parties de contact étant une partie de contact de mise à la masse (41), caractérisé en ce que le bouchon (30) est muni d'une gorge périphérique (33), que la partie de contact de mise à la masse (41) présente une bague (42) reliée aux éléments de connexion (41a, 41b) et sur laquelle sont prévues des griffes à ressort (43) en métal élastique, qui font saillie radialement, en ce que la bague (42) est logée dans le bouchon (30) à la hauteur de la gorge périphérique (33) de manière que les griffes à ressort (43) fassent saillie dans la gorge périphérique (33) et en ce que la longueur des griffes à ressort (43) est calculée de manière que leurs extrémités débordent suffisamment loin au-delà d'une section transversale qui correspond à la section d'ouverture de l'enveloppe métallique (21) pour que, lors de l'emmanchement du bouchon (30) dans l'enveloppe métallique (21), les griffes à ressort (43) se recourbent et s'appliquent élastiquement contre la face intérieure de l'enveloppe métallique (21).

2. Boîtier électronique selon la revendication 3, caractérisé en ce que les parties de connexion (41a, 41b) et les griffes à ressort (43) sont découpées, en une seule pièce avec la bague (42), dans une tôle élastique et en ce que les parties de connexion (41a, 41b) sont repliées à angle droit par rapport au plan de la bague (42) vers des côtés mutuellement opposés.

3. Boîtier électronique selon la revendication 1 ou 2, caractérisé en ce que le bouchon (30) est une pièce moulée en matière plastique dans laquelle les parties de contact (40, 41) sont noyées.

4. Boîtier électronique selon la revendication 3, caractérisé en ce que le bouchon (30) possède une région dont la section est plus grande que la section d'ouverture de l'enveloppe métallique (21), de sorte qu'elle limite l'enfoncement du bouchon (30) dans l'enveloppe métallique (21).

5. Boîtier électronique selon une des revendications 1 à 4, caractérisé en ce que les segments de bord (34, 35) du bouchon (30) situés des deux côtés de la gorge périphérique (33), qui se trouvent à l'intérieur de l'enveloppe métallique (21) lorsque le bouchon (30) est entièrement enfoncé, ont une section qui est légèrement plus petite que la section d'ouverture de l'enveloppe métallique (21), de sorte qu'il subsiste une fente étroite entre ces segments de bord (34, 35) et l'enveloppe métallique (21).

6. Boîtier électronique selon la revendication 5, qui est rempli, immédiatement avant la mise en place du bouchon (30), d'une masse de remplissage liquide (25) qui durcit après la mise en place du bouchon (30), caractérisé en ce que la fente entre les segments de bord (34, 35) du bouchon (30) et l'enveloppe métallique (21) est calculée de manière que la masse de remplissage (25) soit attirée dans la gorge périphérique (33) par capillarité.

7. Boîtier électronique selon la revendication 6, caractérisé en ce qu'un évidement (31) est moulé dans la face frontale du bouchon (30) qui se trouve à l'intérieur du boîtier électronique (20) et en ce que le bouchon (30) plonge assez profondément dans la masse de remplissage (25) pour que l'évidement (31) soit au moins partiellement rempli de masse de remplissage (25).

8. Boîtier électronique selon la revendication 8, caractérisé en ce que des trous d'échappement d'air (38) s'étendent de l'évidement jusqu'à la périphérie extérieure du bouchon (30).
